# EUROPÄISCHE PATENTSCHRIFT

(11) **EP 1 637 860 B1**
(45) Veröffentlichungstag und Bekanntmachung des Hinweises auf die Patenterteilung: **02.09.2009**
(21) Anmeldenummer: 05014920.2
(22) Anmeldetag: 09.07.2005
(51) Int. Cl.: G01M 1/04, G01M 1/32

(54) **Wuchtanlage zum Auswuchten von Fahrzeugrädern**
Arrangement for balancing vehicle wheels
Dispositif pour l'équilibrage de roues de véhicules

(30) Priorität: 15.09.2004 DE 102004044470
(43) Veröffentlichungstag der Anmeldung: 22.03.2006
(73) Patentinhaber: Bayerische Motoren Werke Aktiengesellschaft, 80809 München (DE)
(72) Erfinder: Mau, Arthur, 94439 Rossbach (DE)
(74) Vertreter: Bücken, Helmut

(56) Entgegenhaltungen:
- WO-A-00/77484
- DE-A1- 4 304 277
- US-A- 2 211 779
- US-A- 4 106 964

## Beschreibung

Die Erfindung bezieht sich auf eine Wuchtanlage zum Auswuchten von Fahrzeugrädern nach dem Oberbegriff des ersten Anspruchs.

In der PKW Automobilindustrie werden zunehmend Leichtmetallräder verbaut, die exakt ausgewuchtet werden müssen. Hierzu sind Wuchtanlagen bekannt, die aus einer Wuchtstation und einer Wuchtkontrollstation bestehen, wobei in der Wuchtstation die evtl. Unwucht des Fahrzeugrades ermittelt und gegebenenfalls mit Wuchtgewichten versehen wird und dann in der nachfolgenden Kontrollstation überprüft wird, ob das Rad nun zu 100 % ausgewuchtet ist.

Sowohl in der Wuchtstation als auch in der Wuchtkontrollstation wird das Fahrzeugrad mit seiner inneren Nabenseite, mit dem das Rad auch später an der Radnabe/Bremstrommel anliegt, aufgespannt.

Deshalb ist die innere Radnabe auch plan bearbeitet.

In der Praxis kommt es immer wieder vor, dass die innere Narbenseite des Fahrzeugrades Verschmutzungen aufweist, so dass das Fahrzeugrad auf dem Aufnahmeteller in der Wuchtanlage nicht plan aufliegt und damit schräg gespannt wird. Damit wird ein falsches Wuchtergebnis ermittelt. Dieser Fehler wird auch in der Regel in der Wuchtkontrollstation, da dort der gleiche Aufnahmeteller wie in der Wuchtstation verwendet wird, nicht ermittelt. Erst am Fahrzeug macht sich dann das falsche Auswuchten durch Vibrieren bemerkbar.

Aufgabe der vorliegenden Erfindung ist es, eine Vorrichtung vorzusehen, bei der Verschmutzungen auf der inneren Nabenseite rechtzeitig in der Wuchtanlage ermittelt werden können.

Diese Aufgabe wird erfindungsgemäß durch die Merkmale des ersten Anspruchs gelöst.

Die Lösung basiert auf der Erkenntnis, dass durch die Verwendung unterschiedlich großer Aufnahmeteller in der Wuchtstation und in der Wuchtkontrollstation bei einer Verunreinigung auf der inneren Nabenseite die Fahrzeugräder mit einer unterschiedliche Schräglage in den beiden Stationen gespannt werden. Damit misst bei einer Verunreinigung die Wuchtkontrollstation trotz Auswuchtens eine Unwucht, so dass das Fahrzeugrad direkt ausgeschleust werden kann und entweder von Hand gereinigt oder zur Nacharbeit weitergeleitet werden kann. Überraschenderweise ist damit eine hundertprozentige Fehlererkennung möglich ohne großen technischen apparativen Aufwand, wie beispielsweise Kameras und Auswerte-Software. Dies haben auch Versuche bestätigt.

Des weiteren ist es möglich, durch die Anwendung der Erfindung auch fehlerhaft bearbeitete innere Narbenseiten zu erkennen, wenn diese sich in Form einer Welligkeit oder anderen Geometriefehlern in der Oberfläche äußern.

Die Unteransprüche bilden vorteilhafte Weiterbildungen der Erfindung.

Versuche haben gezeigt, dass eine Durchmesserdifferenz der beiden Aufnahmeteller von mindestens 10% ausreicht, um Verschmutzungen auf der inneren Nabenseite zuverlässig zu erkennen.

Im Folgenden wird die Erfindung anhand eines bevorzugten Ausführungsbeispiels näher beschrieben. Es stellen dar:
- Figur 1: einen schematisierten Aufnahmeteller in einer Wuchtstation mit plan aufliegendem Fahrzeugrad;
- Figur 2: einen schematisierten Aufnahmeteller einer Kontrollwuchtstation mit plan aufliegendem Fahrzeugrad;
- Figur 3: einen schematisierten Aufnahmeteller einer Wuchtstation gemäß Figur 1 mit Schmutzpartikeln zwischen Aufnahmeteller und Fahrzeugrad;
- Figur 4: ein schematisierten Aufnahmeteller einer Wuchtkontrollstation mit Schmutzpartikeln zwischen Aufnahmeteller und Fahrzeugrad.

In allen vier Figuren ist sowohl die Wuchtstation als auch die Wuchtkontrollstation nur schematisiert durch ihren Aufnahmeteller dargestellt. Ebenso schematisiert ist von dem aufgespannten Fahrzeugrad nur der Nabenbereich mit anschließenden Speichen zum Teil gezeigt. Alle übrigen Bauteile, wie beispielsweise die Spanneinrichtung zum Spannen eines Fahrzeugrades auf den Aufnahmetellern, sind nicht dargestellt, da sie handelsüblich sind.

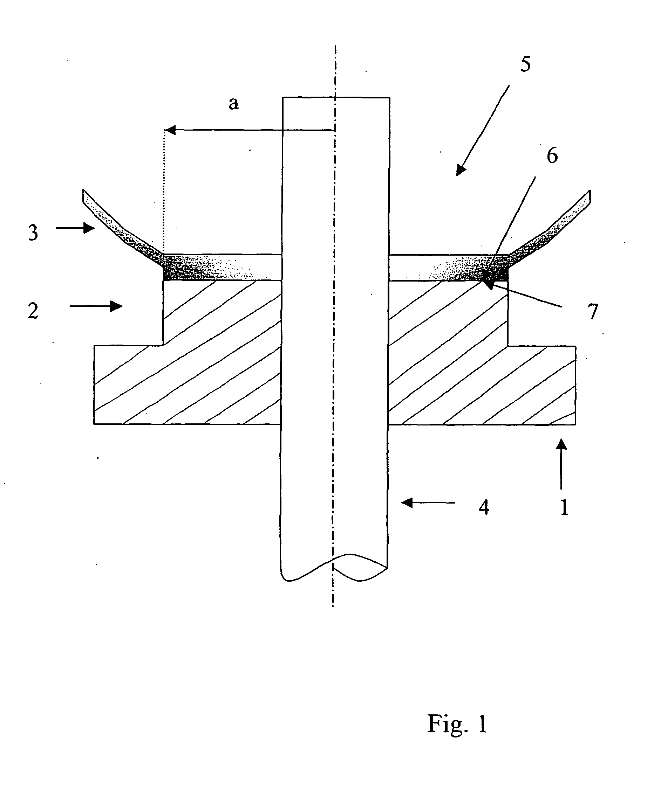

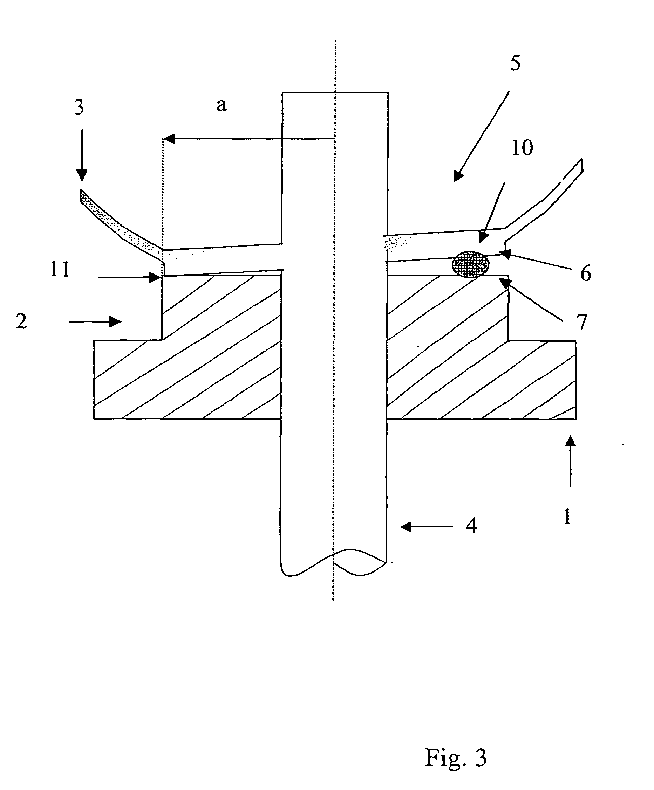

In den Figuren 1 und 3 ist ein handelsüblicher Aufnahmeteller 1 einer Wuchtstation 2 im Querschnitt schematisiert dargestellt. Auf ihm wird ein Fahrzeugrad 3, insbesondere ein Leichtmetallrad, aufgespannt. Aufnahmeteller und aufgespanntes Fahrzeugrad werden über die Welle 4 in Drehung versetzt, damit eine Unwucht in an sich bekannter Weise ermittelt werden kann.

Von dem Fahrzeugrad 3 ist nur der Narbenbereich 5 dargestellt, wobei in üblicher Weise die innere Narbenseite 6 auf der Oberfläche 7 des Aufnahmetellers 1 plan aufliegt. Die Oberfläche 7 ist in ihrer Größe so bemessen, dass handelsübliche Leichtmetallräder plan aufliegen können. Sie weist einen Radius a auf, der beispielsweise im Bereich von 80 mm liegt.

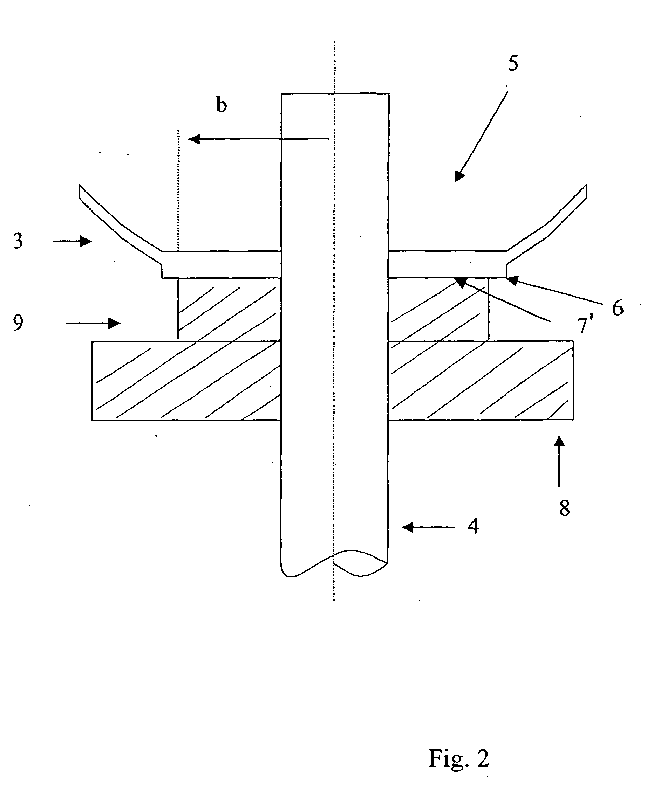

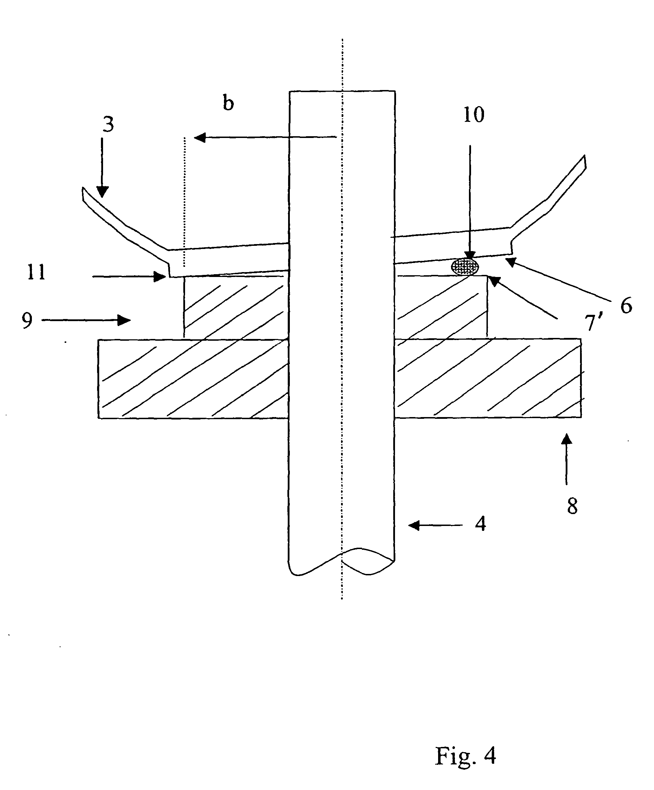

In Figur 2 und 4 ist ein Aufnahmeteller 8 einer Wuchtkontrollstation 9 gezeigt. Auch hier ist wieder das Fahrzeugrad 3 in an sich bekannter Weise aufgespannt. Der Aufnahmeteller 8 der Wuchtkontrollstation 9 weist einen Radius b im Bereich seiner Oberfläche 7', an der die innere Narbenseite 6 des Rades anliegt, auf. Der Radius b beträgt beispielsweise 73 mm, wenn der Radius a = 80 mm ist.

In den Figuren 1 und 2 weist die innere Narbenseite 6 keinerlei Schmutzpartikel auf, so dass die innere Narbenseite 6 plan auf der Oberfläche 7 bzw. 7' aufliegt.

In der Wuchtstation 2 wird in an sich bekannter Weise die Unwucht des Fahrzeugrades 3 festgestellt, wobei dann in einem nächsten Arbeitsschritt entsprechende Wuchtgewichte angebracht werden. In der Wuchtkontrollstation 9 wird dann überprüft, ob das Fahrzeugrad 3 innerhalb der vorgegebenen Toleranzen gewuchtet wurde.

Die Anordnung nach Figur 3 und 4 unterscheidet sich von der Anordnung nach Figur 1 und 2 dadurch, dass an der inneren Narbenseite 6 des Fahrzeugrades 3 ein im Beispiel vergrößert gezeichneter Schmutzpartikel 10 vorhanden ist. Dies kann beispielsweise ein Holzspan von der Verpackung der Fahrzeugräder sein oder auch ein Metallspan, da die innere Narbenseite 6 gerade bei Leichtmetallrädern nochmals plan gedreht wird.

Durch den Schmutzpartikel 10 wird das Fahrzeugrad 3 in der Wuchtstation 2 schräg aufgespannt. Die nunmehr ermittelte Unwucht ist deshalb nicht passend.

In der Wuchtkontrollstation 9 liegt das nun gewuchtete Fahrzeugad 3 mit dem Schmutzpartikel 10 aufgrund des geringeren Durchmessers der Oberfläche 7' in einer anderen Schräglage, da die dem Schmutzpartikel 10 gegenüberliegende Kante 11 der Oberfläche 7' aufgrund des vorgenannten Radius b nach innen zur Radnarbenmittel verschoben ist. Damit wird in der Wuchtkontrollstation 9 eine Unwucht gemessen, obwohl das Fahrzeugrad gemäß den Angaben aus der Wuchtstation 2 in Figur 3 richtig gewuchtet wurde.

Damit ist es möglich, das Fahrzeugrad 3 auf Verschmutzungspartikel auf der inneren Narbenseite 6 zu untersuchen und diese zu entfernen oder das Fahrzeugrad 3 zur Nacharbeit zu geben.

Selbstverständlich kann es auch möglich sein, dass auf dem Aufnahmeteller 1 in der Wuchtstation 2 Schmutzpartikel liegen, die nicht mittransportiert wurden mit dem Fahrzeugrad 3 zur Wuchtkontrollstation. Da liegt das gewuchtete Fahrzeugrad 3 in der Wuchtkontrollstation 9 plan auf, wie in Figur 2, jedoch wird auch eine Restunwucht festgestellt, da es bei Ermitteln der Unwucht in der Wuchtstation 2 schräg aufgespannt war. Auch in diesem Fall kann der Ursache nachgegangen werden und so der Aufnahmeteller 1 aus der Wuchtstation 2 gereinigt werden und dann das nicht korrekt gewuchtete Fahrzeugrad 3 erneut gewuchtet werden.

Der gleiche Fall, wie gerade oben beschrieben, tritt auch dann auf, wenn der Aufnahmeteller 8 im Durchmesser so bemessen ist, dass der Schmutzpartikel 10 nun nicht mehr auf der Oberfläche 7' aufliegt. Auch dann wird in der Wuchtstation eine Schräglage des Fahrzeugrades 3 und damit ein Wuchtfehler gemessen und ausgeglichen, der durch die Planlage des Fahrzeugrades 3 in der Wuchtkontrollstation 9 nicht mehr vorhanden ist, aber bei dem Auswuchten berücksichtigt wurde.

Durch die Erfindung ist es möglich, auf teure Kameras, Scannersysteme und Software zum Ermitteln der Planlage eines Fahrzeugrades auf dem Aufnahmeteller einer Wuchtstation bzw. einer Wuchtkontrollstation zu verzichten. Trotzdem kann mit den relativ einfachen Maßnahmen zu 100 % überprüft werden, ob Wuchtungsfehler dadurch auftreten, dass sich beim Wuchten Schmutzpartikel zwischen der Oberfläche des Aufnahmetellers und der Narbeninnenseiten befunden haben.

## Patentansprüche

1. Wuchtanlage zum statischen Auswuchten von luftbereiften Fahrzeugrädern, insbesondere von luftbereiften Leichtmetallrädern, bestehend zumindest aus einer Wuchtstation und einer Wuchtkontrollstation, wobei in jeder Station zumindest ein liegender Aufnahmeteller mit Spanneinrichtung zur Aufnahme des zu wuchtenden bzw. gewuchteten Fahrzeugrades vorgesehen ist,
**dadurch gekennzeichnet, dass** der Aufnahmeteller (8) der Wuchtkontrollstation (9) einen kleineren Durchmesser hat als der Aufnahmeteller (1) in der Wuchtstation (2).

2. Wuchtanlage nach Anspruch 1,
**dadurch gekennzeichnet, dass** der Durchmesser des Aufnahmetellers (8) der Wuchtkontrollstation (9) mindestens 10% kleiner ist als der der Wuchtstation (2).

## Claims

1. A balancing system for the static balancing of vehicle wheels with pneumatic tyres, especially alloy wheels with pneumatic tyres, comprising at least a balancing station and a balancing control station, at least one horizontal receiving table with a tensioning device being provided to receive the vehicle wheel which is balanced or to be balanced in each station,
**characterised in that** the receiving table (8) of the balancing control station (9) has a smaller diameter than the receiving table (1) in the balancing station (2).

2. A balancing system according to claim 1,
**characterised in that** the diameter of the receiving table (8) of the balancing control station (9) is at least 10% smaller than that of the balancing station (2).

## Revendications

1. Installation d'équilibrage de balourds statiques de roues de véhicule à pneumatiques notamment de roues en métal léger, équipées de pneumatiques, se composant d'un poste d'équilibrage et d'un poste de contrôle d'équilibrage, et dans chaque poste est prévu au moins un plateau de réception, horizontal avec une installation de serrage pour recevoir la roue du véhicule à équilibrer ou qui est équilibrée,
**caractérisée en ce que**
le plateau de réception (8) de l'installation de contrôle d'équilibrage (9) a un diamètre plus petit que le plateau de réception (1) du poste d'équilibrage (2).

2. Installation d'équilibrage selon la revendication 1,
**caractérisée en ce que**
le diamètre du plateau de réception (8) du poste de contrôle d'équilibrage (9) est inférieur d'au moins 10 % à celui du poste d'équilibrage (2).
